# EUROPEAN PATENT SPECIFICATION

(11) **EP 2 033 088 B1**
(45) Date of publication and mention of the grant of the patent: **08.08.2018**
(21) Application number: 07797584.5
(22) Date of filing: 18.05.2007
(51) Int. Cl.: G06F 8/36

(54) **METHOD AND SYSTEM FOR RAPIDLY DEVELOPING SENS0R-ENABLED SOFTWARE APPLICATIONS**
VERFAHREN UND SYSTEM ZUR RASCHEN ENTWICKLUNG SENSORAKTIVIERTER SOFTWARE-ANWENDUNGEN
PROCÉDÉ ET SYSTÈME PERMETTANT DE DÉVELOPPER RAPIDEMENT DES APPLICATIONS LOGICIELLES ACTIVÉES PAR DÉTECTION

(30) Priority: 29.06.2006 US 478085; 14.02.2007 US 674893
(43) Date of publication of application: 11.03.2009
(73) Proprietor: Hexagon Technology Center GmbH, 9435 Heerbrugg (CH)
(72) Inventor: HARVEY, Clint, Morgantown, West Virginia 26508 (US); MOODY, John, Morgantown, West Virginia 26508 (US); WILLIAMS II, Jackie, Fairmont, West Virginia 26554 (US); ESPOSITO II, Patrick, Morgantown, West Virginia 26505 (US); THOMAS, George, Friendsville, Maryland 21531 (US); REED, Jared, Morgantown, West Virginia 26505 (US); KESECKER II, Brian, Fairmont, West Virginia 26554 (US); ESPOSITO, Patrick, Morgantown, West Virginia 26505 (US)
(74) Representative: Kaminski Harmann
(86) International application number: PCT/US2007/069246
(87) International publication number: WO 2008/002731

(56) References cited:
- US-B1- 6 636 878
- US-B2- 6 636 242
- GOLATOWSKI, F.; BLUMENTHAL J.; HANDY, M.; HAASE, M: "Service-oriented software architecture for sensor networks" INTERNATIONAL WORKSHOP ON MOBILE COMPUTING, IMC 2003, 1 June 2003 (2003-06-01), pages 1-8, XP002568907 Rostock, Deutschland ISBN: 3-8167-6319-7
- LEVIS P ET AL: "TinyOS: An Operating System for Sensor Networks" 1 January 2005 (2005-01-01), AMBIENT INTELLIGENCE, SPRINGER BERLIN HEIDELBERG, PAGE(S) 115 - 148 , XP009128799 ISBN: 9783540238676 [retrieved on 2005-12-12] * abstract * * paragraph [001.] - paragraph [02.2] *
- MORTON Y T ET AL: "An approach to develop component-based control software for flexible manufacturing systems" PROCEEDINGS OF THE 2002 AMERICAN CONTROL CONFERENCE. ACC. ANCHORAGE, AL, MAY 8 - 10, 2002; [AMERICAN CONTROL CONFERENCE], NEW YORK, NY : IEEE, US, vol. 6, 8 May 2002 (2002-05-08), pages 4708-4713, XP010597670 ISBN: 978-0-7803-7298-6
- 6NET: 'Deliverable D.2.2.3' 6NET.ORG 25 May 2004, page 66

## Description

### BACKGROUND

### Field of the Invention

The present invention generally relates to software development systems and methods, and particularly relates to a method and system for rapidly developing sensor-enabled software applications.

### Background

IDEs (integrated development environments), such as the VISUAL STUDIO development environment offered by MICROSOFT, greatly facilitate the development of complex software applications. However, whether or not an IDE is used, developing sensor-enabled software applications represents a significant programming challenge.

For example, a given software application may be required to collect and process sensor data from a variety of local and/or remote sensors. Generally, at least for each type of sensor involved, and for each type of connection (local or remote, file or database, etc.), the programmer must add dedicated program code. Further, given the possible interrelationships represented by the data being collected from different types of sensors and/or from sensors in different locations, and given the often asynchronous nature of sensor data events, coordinating the collection, processing and interlinking of such data is challenging to say the least.

The document "Service-oriented software architecture for sensor networks" by F.Golatowski et al. (INTERNATIONAL WORKSHOP ON MOBILE COMPUTING, 1 June 2003, Rostock, Deutschland ISBN: 3-8167-6319-7), describes a service oriented software architecture for mobile sensor networks that simplifies the development of service applications in sensor networks by separating the software from the underlying hardware in facilitating the programming on a high abstraction layer.

### SUMMARY

While the range of features and operations of sensor-enabled software applications varies as widely as the range of sensor types and desired functionality, most or all such applications commonly share the requirements of obtaining, processing and storing sensor data. In many instances, even these basic requirements require significant programmer effort, given the often asynchronous nature of sensor-based data acquisition, the wide range of data types involved, and the potentially complex data and processing flows involved. To that end, a component-based software toolset and corresponding method enable rapid development of sensor-enabled software applications based on defining and providing a set of sensor-related software components that operate as simple building blocks which are layered or hierarchically linked together to form complex and robust sensor-enabled software applications.

For example, in one embodiment, a component-based software toolset for rapidly developing sensor-enabled software applications includes a number of building block components, i.e., it includes a number of class definitions enabling a programmer to instantiate the building block components as needed or desired within the sensor-enabled software application being developed. At least one such embodiment includes software component class definitions for a plurality of sensor-related software components, including data source components, data destination components, data series components, and data field components.

According to respective class definitions in at least one embodiment, data source components act as a source of incoming sensor data by obtaining sensor data from specified sources, such as data files, databases, APIs/DLLs, or other software components. These components include software methods or functions supporting a range of operations associated with reading or otherwise obtaining sensor data and indicating the availability of such data.

Similarly, at least one embodiment of the class definitions, data destination components, act as targets for data series components, and the toolset enables the programmer to link given data series components to one or more data destination components. In this manner, a data destination component can be made to receive data from one or more data series components. According to respective class definitions in at least one embodiment, data destination components comprise at least one of file writer components, database writer components, and client/server components.

Complementing the data source and destination components, the class definitions for data series components (and/or one or more related components) include software methods or functions supporting a range of functions that allow a given data series component to link with a specified data source component, automatically collect incoming sensor data from that linked data source component, automatically perform on-the-fly data conversion for all or selected portions of the incoming sensor data, automatically (and conditionally) trigger one or more specified events responsive to newly incoming sensor data, and to pass along data (raw or processed) to one or more specified data destination components.

In simple terms, for at least one embodiment, a given data series component generates an in-memory data series table, links to a specified data source component, and automatically collects incoming sensor data from that linked data source component in its data series table. Correspondingly, in at least one embodiment, the class definitions include data field components. Each data field component defines a data field (table column) in the data series table of its associated data series component, and allows the programmer to specify which portion of the incoming sensor data being collected by the associated data series component is written to the corresponding data field-i.e., it maps sub-data from incoming sensor data to a corresponding table column-and to specify the data type to be used for storing that portion of the incoming sensor data in the data field.

Further, in at least one embodiment, the class definitions include data event and event condition components. For a given data series component, these class definitions allow the programmer to add data event components which perform conditionally-triggered catching or filtering operations (as specified by the programmer) on the incoming sensor data. Each data event component allows the programmer to specify one or more triggering conditions, or related sets of triggering conditions, by way of adding event condition components.

Still further, in at least one embodiment, the class definitions include server and client components. Each such component is configurable by the programmer to act as a data source or data destination component with respect to a specified network address. As such, the class definitions include software methods or functions enabling TCP/IP and UDP communications functionality, such that raw or processed sensor data may be sent to or received from network socket connections. More particularly, each client component allows the specification of one or more network address, only one of which is actively connected at any given time, such that it acts as either an input or output for the specified address or server component. In contrast, each server component supports multiple simultaneous connections, and can act as an input, an output, or both, for any or all such connections.

At least one embodiment of the toolset includes class definitions for sensor system components operative to act as a container for one or more of related data source components, data destination components, data series components, data field components, data event components, and event condition components. In at least one embodiment, data source, destination, and series components are children of a parent sensor system component, while data field and data event components are children of a parent data series component. Event condition components can be added as children of a parent data event component.

Still further, at least one embodiment of the toolset includes class definitions for sensor system group components, each such sensor system group component operative to generate an in-memory group data series table, and to merge programmer-selected items from the data series tables of data series components in one or more sensor system components. Such class definitions also may provide for data event triggering and conditional qualification operations, in much the same way that is provided for data events at the individual data series component level. Also, in at least one embodiment that includes class definitions for working across sensor system components, the class definitions provide for sensor relay components, each such sensor relay component operative to link a data series component in one sensor system component as a data source for a data series component in the same or another sensor system component.

With the above framework in mind, a programmer can build sophisticated sensor data acquisition and processing flows, simply by adding, inter-linking, and configuring a few simple components as building blocks. Of course, the present invention is not limited to the above features and advantages. Indeed, those skilled in the art will recognize additional features and advantages upon reading the following detailed description, and upon viewing the accompanying drawings.

The invention is defined by the appended independent claims. The dependent claims define preferred embodiments.

### BRIEF DESCRIPTION OF THE DRAWINGS

Fig. 1 is a block diagram of a computer-readable medium, such as system memory, disk, non-volatile storage, etc., storing one embodiment of a component-based software toolset for rapidly developing sensor-enabled software applications as taught herein.
Fig. 2 is a block diagram illustrating an embodiment of the toolset of Fig. 1 implemented as an add-in for an IDE.
Fig. 3 is a block diagram illustrating an embodiment of the toolset of Fig. 1 implemented as a standalone software development application.
Fig. 4 is a block diagram illustrating a basic complement of sensor components provided by one or more embodiments of the toolset.
Fig. 5 is a block diagram illustrating one embodiment of the data series component illustrated in Fig. 4.
Fig. 6 is a block diagram illustrating one embodiment of the sensor system component defined by one or more embodiments of the toolset.
Fig. 7 is a block diagram of the object model used for one embodiment of the sensor system component included in the toolset.
Fig. 8 is a block diagram of the object model used for one embodiment the data series component included in the toolset.
Fig. 9 is a block diagram of the object model used for one embodiment of the data event component included in the toolset.
Fig. 10 is a block diagram of the object model used for one embodiment of the sensor system group component included in the toolset.
Fig. 11 is a block diagram of one embodiment of a development system and application hosting platform, which may be used with the toolset.
Fig. 12 is a block diagram of toolset components for an example sensor-enabled software application.

### DETAILED DESCRIPTION

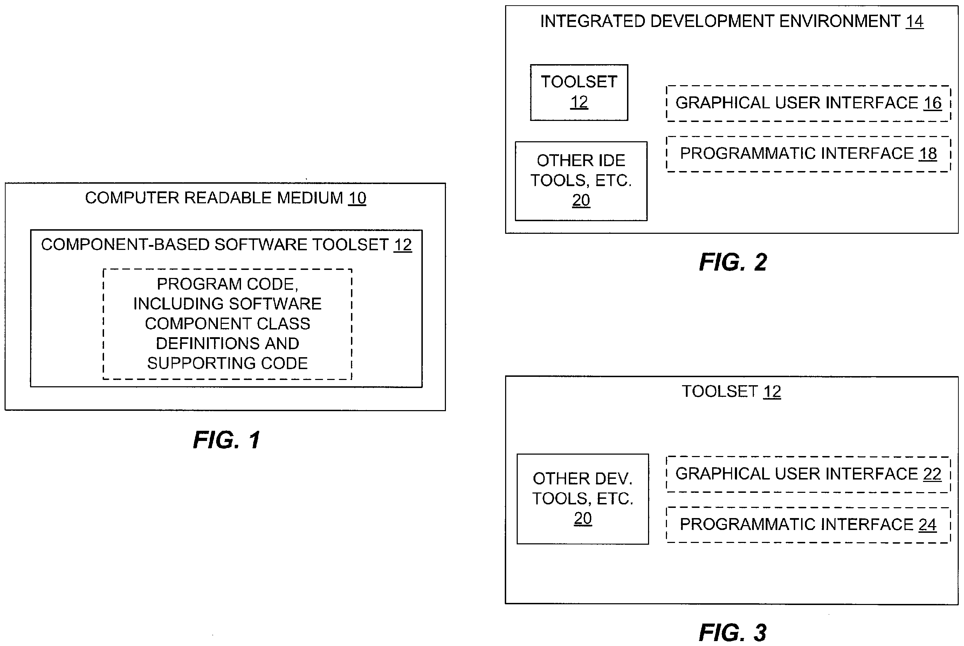

Fig. 1 illustrates a computer-readable medium 10 storing one embodiment of a component-based software toolset 12 that includes program code supporting the rapid development of sensor-enabled software applications. The program code comprising the toolset 12 includes, in one or more embodiments, component class definitions and supporting code, that allow the programmer to rapidly add sensor-related data acquisition, processing, storage, and transfer functionality to a software application. However, although this disclosure refers to "sensor data" in many instances, and in its appended claims, those skilled in the art should appreciate that the term "sensor data" as used herein does not necessarily connote data obtained from a physical sensor. The apparatus and methods herein provide advantageous collection and processing functions for data from any source, such as computer or network log files, simulation and other computer processing results, etc.

With the above broad applicability in mind, Fig. 2 illustrates that, in at least one embodiment, the toolset 12 is configured as an add-in to an IDE (Integrated Development Environment) 14, which includes a GUI (graphical user interface) 16 for drag-and-drop application development, a programmatic interface 18 for command-line/text-editor based programs, and other IDE tools and supporting software 20. In at least one such embodiment, the IDE 14 comprises MICROSOFT VISUAL STUDIO and the toolset 12 comprises an add-in toolset for VISUAL STUDIO. In this, and in other IDE embodiments, the toolset 12 provides graphical representations of its defined sensor-related components, such that the programmer can instantiate those components as needed via drag-and-drop programming. Further, the toolset 12 supports programmatic instantiation of its components and, for at least some of those components, supports programmatic control, such as manual data reads, event triggers, etc., as will be explained later herein.

Of course, those skilled in the art will appreciate that the toolset 12 broadly comprises a set of sensor-related components that allow programmers to build sophisticated sensor-enabled software applications by adding predefined sensor-related components and interlinking those components to define potentially complex sensor data processing flows. As such, the toolset 12 may be configured as an add-in for IDEs other than VISUAL STUDIO, and different versions of the toolset 12 may be produced for different IDEs. Further, as illustrated in Fig. 3, the toolset 12 may comprise a standalone software application-although it still may link with other installed applications, such as language compilers, etc.-and may therefore include program code providing its own graphical and programmatic interfaces 22 and 24, respectively, and may provide a host of additional supporting development tools and functions 20.

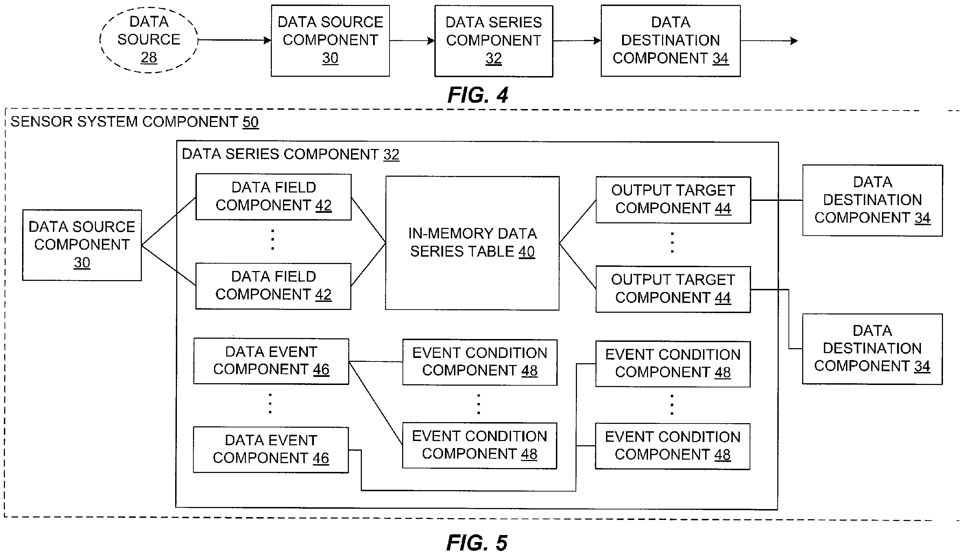

Fig. 4 illustrates a basic building block approach, wherein the toolset 12 at least includes class definitions and supporting program code for instantiating data source components 30, data series components 32, and data destination components 34. With that, the illustration logically depicts a data source 28 which provides sensor data that is of interest. The data source 28 may logically represent, by way of non-limiting example, a data file holding sensor data, a database holding sensor data, a network socket connection providing sensor data, etc.

To obtain sensor data from the data source 28, the programmer instantiates a data source component 30, which is linkable to a specified source of sensor data and operative to obtain incoming sensor data from the specified source. That is, the data source component 30 allows the programmer to specify the particular data source (or sources for some types of data source components 30) from which to acquire sensor data, and further provides one or more software methods or functions for reading or receiving sensor data from the specified data source. Thus, generally speaking, the programmer adds a data source component 30 for each source of sensor data of interest, and each data source component 30 acts as an input conduit for sensor data from the linked source. Note, too, that one or more embodiments of the data source component 30 can obtain data from more than one source. That is, a given data component 30 can be reconfigured on the fly to bring in data from more than one source, or, in at least some embodiments, it can operate with changeable identifiers or commands that bring in data from different sources.

To collect incoming sensor data from the illustrated data source component 30, the programmer instantiates a data series component 32. The data series component 32 is linkable to a specified data source component 30 and is operative to generate an in-memory data series table (not shown in Fig. 4) and to automatically collect incoming sensor data from the linked data source component 30 in its data series table. As such, the programmer adds as many data series components 32 as desired for collecting the incoming sensor data from a given data source component 30. Further, the programmer links each data series component 32 to a desired number of data destination components 34 (one is illustrated), such that each data series component 32 automatically provides new table data from its data series table to each linked data destination component.

Thus, in the context of Fig. 4, the data source component 30 obtains sensor data from the data source 28, and thus acts as a source of incoming sensor data. In turn, the data series component 32 links to the data source 30 and automatically collects that incoming sensor data into its data series table. Further in turn, newly populated table data may be passed by the data series component 32 to the linked data destination component 34, which may be of a type that writes data to files, to a database, or that sends the table data over a network socket connection.

Notable details to be more fully explored later herein are that one or more embodiments of the data series component 32 can be configured to catch, filter, or otherwise process the incoming sensor data, to conditionally evaluate the incoming sensor data and/or the processed data, and to raise one or more programmer-specified events based on the conditional evaluation. However, it should be understood that even in their most simple embodiments, the data source component 30, data series component 32, and data destination component 34 together define a configurable sensor data processing flow that allows the software application being developed to obtain sensor data from a given data source 28, and automatically collects that sensor data into system memory, optionally qualifies and/or processes it, and then passes it along to a desired destination, subject to that qualification and processing. All of this can be done without any, or with very little manual programming, using point-and-click programming techniques.

Those skilled in the art may have recognized that the above example alluded to the potential sophistication of the data series component 32. Fig. 5 illustrates one embodiment of the data series component 32 in more detail, as defined by the associated class definitions provided in one or more embodiments of the toolset 12. The illustrated data series component 32 generates an in-memory data series table 40, and includes one or more data field components 42, each one defining a corresponding data field-i.e., column-in the data series table 40. The data series component 32 optionally further includes output target components 44, data event components 46, and event condition components 48. (Note that in the illustrated hierarchy the data field components 42 are children of the data series component 32, as are the data event components 46 and the output target components 44, while the event condition components 48 are children of respective ones of the data event components 46. Those skilled in the art will recognize the illustrated hierarchy as logically advantageous but non-limiting.)

As explained before, each data field component 42 is operative to define a data field in the data series table 40 of the (parent) data series component 32 by controlling which portion of incoming sensor data is stored in a corresponding column of the data series table 40 and by controlling the data type used for storing that portion of the incoming sensor data in the corresponding column. The data field component 42 includes methods enabling the programmer to specify these properties. That is, data field component 42 is defined to include one or more software methods or functions operative to receive programmer input identifying the portion of incoming sensor data to store in the corresponding column and indicating the desired data type to be used for storing that portion of the incoming sensor data.

In more detail, each data field component 42 allows the programmer to specify which portion of the incoming sensor data should be stored in the data series table field defined by that data field component 42. Also, where that portion of data is itself "composite" in some sense, the data field component 42 further allows the programmer to specify the elements or components of that composite data that is specifically of interest. For example, assume that a given data field component 42 is configured to take a byte array from the incoming sensor data. In that case, the data field component 42 allows the programmer to identify the one, several, or a range of array elements within that byte array that are of particular interest, such that only those specified elements are captured. Aiding this functionality, the data field component 42 may be defined such that an instantiated data field component 42 is operative to display data element selection options that are tailored for the particular data type that the programmer has selected for that data field component (e.g., offset and mask values for string, array, binary, packet).

In at least some embodiments, the class definitions for the data field component 42 also include one or more software methods or functions operative to perform on-the-fly data conversion as needed, such that the indicated portion of the incoming sensor data that is to be stored in the corresponding column of the corresponding data series table 40 is automatically converted to the desired data type. This dynamic data conversion may be quite sophisticated, and enables the conversion of disparate data types (e.g., float values to time/date stamps).

In the broader context, each data field component 42 is configurable by virtue of various options relating to the type of input data, the portions of elements of input data that are of interest for the data field defined by the given data field component 42, and the data type of the defined data field (which may be quite different than the data type of the incoming data portion that is of interest). In at least one embodiment of the toolset 12, the options presented for configuring a data field component 42 change as configuration decisions are made, i.e., the range of options presented narrows as higher-level options are successively set, meaning that the options presented at any given time are only those remaining options that are relevant or sensible. (Indeed, in one or more embodiments of the toolset 12, some or all of the component definitions include software methods or functions whereby the option/property settings of an instantiated component presented to the programmer are dynamically narrowed or tailored to display only those items appropriate for the current configuration state of the component.)

As an example, the field relationships that can be configured for a given data field component 42 are configurable via a number of options, but subsets of those options make sense for one type of input data but not others. Thus, in one embodiment of the toolset 12, the options presented to the programmer for a given data field component dynamically change as a function of the type of data source component 30 that is linked to the parent data series component 32.

As one example, for a command component type as the input source, the options for specifying the input data items of interest are the parameters associated with the command function or the return value(s) associated with the command function. As another example, if the parent data series component 32 links to another data series component 32 as its source of data, the options for setting the data field definitions indicate the data fields defined in the data series table 40 of the source data series component 32 (or can be related to an XML version of the data fields in the source data series component 32).

Further, regardless of what provides input data to a given data series component 32, the toolset 12 includes program code enabling data field components 42 to be used for defining "custom" data fields. In at least one such embodiment, the class definitions allow an instantiated data field component 42 to be used for defining a "custom" data field in the data series table 40 of its parent data series component 32. In this sense, the term "custom" denotes data not mapped directly from the incoming sensor data, although the custom value may be derived from that data.

For example, assuming that a given data series component 32 includes two data field components 42 that have been configured to define first and second integer data fields in the data series table 40 of their parent data series component 32. With that, the programmer could add a third data field component 42, and configure it to generate a custom data field value by adding the first two data field values. As such, each time a new row in the data series table is populated with new values for the first and second integer data fields, their sum would be stored in the custom data field of that row.

More generally, in at least one embodiment, the toolset 12 allows the programmer to define custom values by combining the incoming data for two or more defined data fields to obtain a custom field, or to otherwise mathematically or logically process all or part of the incoming data to derive a custom value. In other instances, custom values may comprise current time/date stamps, row count values, etc. In short, the custom value generation capability of the data field components 42 allows custom data values to be stored whenever a new row in the data series table 40 is populated with incoming sensor data.

Thus, the data field components 42 added to a given data series component 32 define the "schema" of the data series table 40 in that given data series component 32. That is, each added data field component 42 defines a corresponding column in the data series table 40, controls which data is stored in that column, and controls the type of data held in that column, performing data conversion if the incoming data for that column is of a different type.

While the data field components 42 control data inputs to the data series table 40, the output target components 44 control, or at least direct, data output from the data series table 40. More particularly, one or more embodiments of the toolset 12 include class definitions allowing the programmer to instantiate output target components 44 as desired, within the parent data series component 32. Each output target component 44 links the data series table 40 of the parent data series component 32 to a specified data destination component 34. More generally, each output target component 44 is operative to link the data series table 40 of its parent data series component 32 to a data destination component 34, such that the parent data series component 32 automatically passes data from its data series table 40 to any data destination component 34 linked to it by a given output target component 44. In at least some embodiments, each output target component 44 provides a Boolean "enable" flag that can be set and cleared programmatically, enabling run-time enabling and disabling of the output link between a given data series component 32 and targeted data destination component 34.

Notably, in one or more embodiments of the toolset 12, data series components 32 can be configured by the programmer to set the size (number of rows) of the data series table 40, and to control how data overflow conditions are handled. For example, as the data series component 32 automatically populates new rows in its data series table 40 in response to newly incoming sensor data, it will generally reach the maximum row count. At this point, in accordance with programmer-specified preferences, newly incoming sensor data will be ignored, i.e., not written to the table, or newly incoming sensor data will be added to the table according to a specified overwrite preference (e.g., oldest data overwritten first). As such, the data series table 40 can be frozen once its maximum size is reached, or it can be operated as, for example, a circular buffer.

In any case, even the above basic arrangement of components provides sophisticated, essentially automatic sensor data flow processing. To appreciate this point, assume that the data source component 30 obtains new incoming sensor data from the data source 28, e.g., new data comes in from a network connection. That sensor data automatically passes to the data series component 32. The data field components 42 break the incoming data down, or otherwise parse it, such that desired portions of the incoming data are mapped to the appropriate columns of the data series table 40 and, if necessary, perform automatic on-the-fly data type conversion, so that the data actually stored in the data series table 40 is of the desired data type. Thus, the data field components 42 collectively operate to automatically populate a new row in the data series table 40 with the mapped/converted data.

Then, as a function of a new row of data being populated in the data series table 40, each output target component 44 automatically passes the new row data out to the programmer-specified data destination component 34. The programmer can add as many output target components 44 as there are desired unique destinations for the table data, and this allows the table data of one data series component 32 to be mapped to multiple data destination components 34. As non-limiting examples, data destination components 34 can represent database writers, file writers, network socket connections, and other components within the toolset 12.

As a further point of flexibility, at least some embodiments of data series components 32 allow one data series 32 to be linked as the data source component 30 for another data series component 32. Such linking allows one data series component 32 to pass table data from its data series table 40 along to another data series component 32, which will store all or a portion of that table data according to its particular configuration.

Adding further to the sophistication of the data series component 32, one or more embodiments of the toolset 12 include class definitions allowing the programmer to instantiate data event components 46 for given data series components 32. In at least one such embodiment, data event components 46 are added as children of a data series component 32. Each data event component 46 is operative to conditionally trigger a desired action responsive to incoming sensor data for its parent data series component 32.

As simple, non-limiting examples, the programmer can configure one or more data event components 46 to filter or otherwise process incoming sensor data. For example, incoming sensor data can be blocked from the table unless it is at or above a defined threshold. As another example, incoming sensor data can be filtered, or otherwise adjusted as it is incoming, to the parent data series component 32. The action(s) taken by data event components 46 is conditional, based on an evaluation of the incoming data. To support conditional evaluation, the toolset 12 includes class definitions and supporting methods/functions allowing the programmer to instantiate event condition components 48 for each data event component 46. Each event condition component 48 is operative to define a condition to be tested or otherwise evaluated as the basis for conditionally triggering the desired action of the parent data event component 46. That is, an event condition component 48 is operative to receive one or more user-defined conditions used by the linked data event component 46. With this logical framework, data event components 46 are configured such that multiple event condition components 48 are addable to a given data event component 46, wherein each data event component 46 includes software methods or functions providing logical AND-ing and OR-ing associations between multiple event conditions.

In more detail, the specific operation and conditional triggering of a given data event component 46 is defined by the programmer based on configuring the event condition component(s) 48 added as children of the given event condition component 46. With this arrangement, each data event component 46 may be understood as comprising one or more conditional expressions (event conditions), wherein each conditional expression is defined by a child event condition component 48.

In at least one embodiment, an event condition component 48 operates with two expression values: (1) the incoming sensor data value of interest for a given data field component 42; and (2) a user-defined value, which may be entered by the programmer, another data field value within the same series, whether newly incoming or previously stored in the data series table 40 of the parent data series component 32, as selected by the programmer. Thus, as a non-limiting example, the programmer can define a conditional expression may be defined using the sub-data intended for a given data field in a given data series table 40 and a past value of that same data field, to allow filtering of that data. Note that conditional evaluation is performed after any of the dynamic data type conversion operations carried out by any of the involved data field components 42 is completed, so that compatible or like data types are involved in the comparison(s).

Regardless, the two expression values are linked by an operation (e.g. greater than, equal to, less than, contains, etc.), which is specified by the programmer. With the expression values thus identified, and the conditional relationship between the two values defined, a given data event component 46 conditionally triggers responsive to incoming sensor data as a function of whether its defined condition(s) is satisfied. Where multiple conditions-i.e., multiple event condition components 48-are defined for a given data event component 46, the programmer can specify whether the data event component 46 should trigger as a function of OR-ing or AND-ing those multiple conditions.

As those skilled in the art will appreciate, the conditional logic afforded by the above structure enables the programmer to define very sophisticated data collection and filtering functions, provide alarm-based functions, etc. For example, a given data series component 32 can be made to ignore newly incoming sensor data unless one or more values (as segregated by the field component mappings) exceed a given threshold. By ignoring the data, the field components 42 do not write data into the data series table 40, and the output target components 44 do not pass data along to the specified data destination components 34. Thus, data not of interest can be blocked from propagating into the processing flow. The data event components 46 also have, in at least some embodiments, programming hooks allowing the programmer to conditionally trigger the execution of custom code, and essentially any number of conditional actions may be taken.

To appreciate such functionality in operation, immediately before a row of data values are inserted into the data series table 40 by the field components 42, the data series component 32, or other program code within the toolset 12, checks to see if there are any data event components 46. If so, every event condition (conditional expression) defined for each event component 46 is evaluated. If the event conditions for a given one of the data event components 46 are satisfied (e.g., "true"), then the conditional action defined by that data event component 46 is performed. Otherwise, the conditional action is not performed.

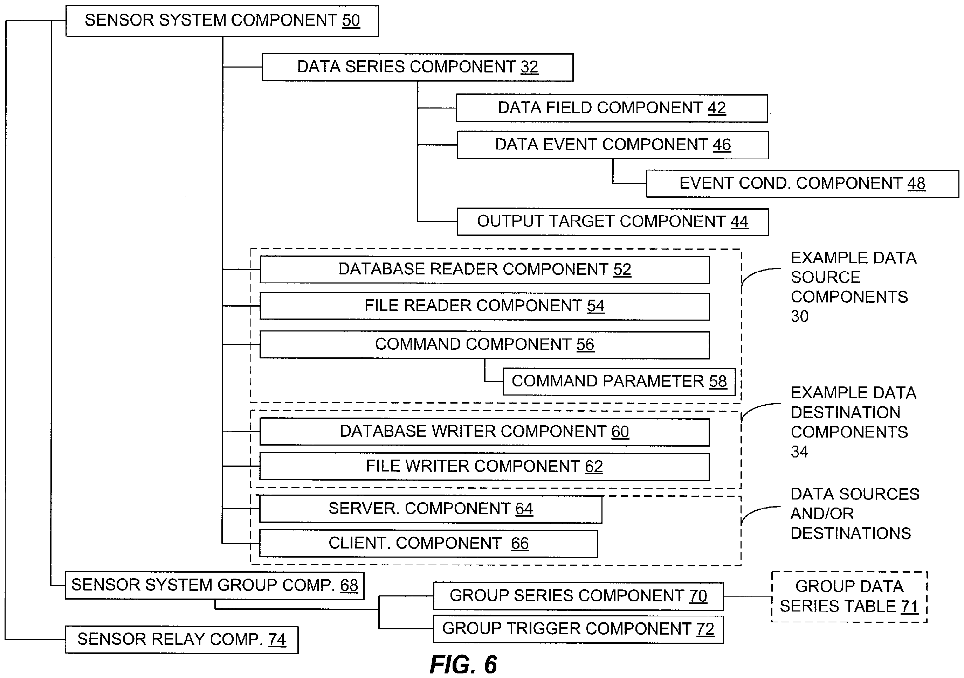

Conditional event triggering, sub-data selection (and automatic conversion), data destination targeting, and other functions afforded by data series components 32 make them a useful building block for programmers developing sensor-enabled software applications. However, the encapsulation and hierarchies illustrated in Fig. 5 for the data series component 32 are extended in one or more embodiments of the toolset 12, such that the toolset 12 offers programmers a fully hierarchical set of building blocks. While various embodiments of the toolset 12 adopt varying hierarchical arrangements of component building blocks, Fig. 6 illustrates the arrangement adopted in one embodiment of the toolset 12.

According to the illustrated embodiment, the toolset 12 includes a sensor system component 50, which is operative to contain, among other items, a related collection of data source, data series, and data field components. That is, the programmer can instantiate a data sensor system component 50, and then instantiate within it the desired number of child data source components 30, data series components 32, and data destination components 34. As such, and as its name implies, the sensor system component 50 effectively provides programmers with the ability to create a complete sensor data processing sub-system within their software applications simply by instantiating (via drag-and-drop or program code) a sensor system component 50 and populating it with the desired configuration of child components.

Fig. 6 also is notable in that it illustrates specific example species of data source components 30 and data destination components 34. More particularly, Fig. 6 illustrates that the heretofore generically described data source components 30 may comprise any one or more of a database reader component 52, a file reader component 54, and a command component 56 (with any number of its related child command parameter components 58). Thus, sources of sensor data include, but are not limited to, data files (such as may be created by data loggers), databases (such as may be created or maintained by data acquisition software), and "command" data sources (which generally represent third-party functions in the form of APIs (application programming interfaces) or unmanaged DLLs (dynamic link libraries). The program code comprising the toolset 12 thus allows the programmer to instantiate the type or types of data source components 30 needed for the software application being developed.

For example, the program code defining the data source component class includes program code defining a file reader component class enabling the programmer to instantiate file reader components 54 as needed, each one operative to obtain sensor data from a user-specified data file. More particularly, the file reader component 54 with its included properties and methods reads data from a specified file, and provides an indication that new data is available.

In that manner, any data series component 32 that is linked to the filed reader component 54 recognizes that the file reader component 54 has read new data from its target file, and automatically pulls that new data in from the file reader component 54. To facilitate automatic population of new file data into the data series table 40 of a linked data series component 32, the data series component 32 allows the programmer to specify "file reader" as the input type and to specify the file reader name or identifier, to link the specifically desired file reader component 54 with the data series table 40 of the data series component 32. Note that multiple file reader components 54 may be instantiated within any given sensor system component 50, and any data series component 32 within the same sensor system component 50 can specify any file reader component 54 within the same sensor system component 50 as its input.

Once a file reader component 54 is instantiated and a given data series component 32 is linked to it, file data is read from the target file using read methods provided by the file reader component 54. These read methods provide numerous options that enable the programmer to specifically define what part(s) of the file need to be read. When linked to a given data series component 32, every time a row of data is read from the target file, that data is automatically populated in the corresponding data series table 40, subject of course to the field definitions imposed on that table, and subject to any conditional events defined for that table.

As non-limiting examples, file reader components 54 include software methods or functions enabling them to read, among other formats, XML, CSV, Binary, Excel, and Text files. In the case of XML files, the file reader component 54 allows the programmer to specify a node depth, indicating the node depth of the data. Finally, file reader components 54 also include file close methods that allow their target files to be released for other use. As such, file reader components 54 allow the software application to automatically read sensor data from a local or network-available data file, and push that data into the data processing flow(s) defined by the selected arrangement of sensor components as provided by the toolset 12.

Similar data retrieval functionality is provided for databases via the database reader component class definitions, which allow the programmer to instantiate database reader components 52 as needed, each operative to obtain sensor data from a user-specified database. Thus, database reader component 52 instantiated within a parent sensor system component 50 serves as the data source component 30 for any one or more of the data series components 32 that reside within that parent sensor system component 50.

The programmer uses each database reader component 52 to read data from a database table and then automatically insert that data into a corresponding data series table 40. To accomplish this, the database reader component 52 includes software methods and properties that enable it to read data from a target database, and indicate the availability of that new data, such that any link data series component 32 automatically populates a new row in its included data series table 40 with that new data, subject, of course, to the field definitions imposed on that table and on any event conditions associated with that table.

The class definitions for the database reader components 52 include methods and properties that allow the programmer to set input type and name values, that link a given database reader 52 to the desired target database. More particularly, the programmer can specify the type of database, connection string, connection type, provider driver, location of the database server, database name, database table name, and authentication credentials, as well as a query statement. Non-limiting examples of supported database types include SQLServer, Access, MySQL, and Oracle. Connection strings and provider drivers for SQLServer, Access, MySQL, and Oracle databases are automatically generated and provided. In cases of a database outside of the aforementioned database types, the connection strings and provider driver may be linked in for compatibility with closed, proprietary databases.

In any case, once a database reader component 52 is instantiated and configured by the programmer, it acts as a source for sensor data for any data series component that is linked to it. As with the file reader components 54, any number of data series components 32 within the same parent sensor system component 50 can be linked to the same database reader component 52.

Still further data retrieval options are available to the programmer via use of command components 56. That is, the program code defining the data source component class includes, in one or more embodiments of the toolset 12, program code defining a command component class. These class definitions enable the programmer to instantiate command components 56, each operative to wrap a user-specified API (e.g., a WINDOWS API) or unmanaged DLL, such that the user-specified API or unmanaged DLL operates as a source of sensor data within the parent sensor system component 50. Effectively, command components 56 allow the programmer to integrate third-party program code meant for specific types of sensors or other data sources. Non-limiting examples include third party cameras, frame grabbers, data acquisition devices, etc.

In operation, the programmer instantiates a command component 56 and one or more child command parameter components 58 for each API/DLL function to be "wrapped" within the sensor system component 50. A single command component 56 represents one function that needs to be wrapped (from the API or unmanaged DLL). The command component 56 can have a return value, just like a function. The various parameters/arguments associated with the third party function being wrapped must be defined by using command parameter components 58. In general, a command component 56 is created for every function to be wrapped and, for each such command component 56, a command parameter component 58 is instantiated for each parameter or argument needed for the wrapped function. Callbacks can also be implemented dynamically in order to interact with the third party function. Advanced data types, such as structures, classes, etc., can also be passed in as command parameters, or received as return arguments.

As with the database and file reader components 52 and 54, a given command component 56 can operate as a data source component 30 for any number of data series components 32 within the same sensor system component 50. With that arrangement, data reads (or the equivalent acquisition function) can be exercised for the API/DLL function wrapped by a given command component 56, and the command component 56 indicates the availability of the new data, such that any linked data series components 32 automatically populate a new row in their respective data series tables 40, subject to field definitions and event conditions.

One advantageous use of command components 56 is the marshaling of sensor data from unmanaged to managed code. That is, the command components 56 enable the programmer to use dedicated WINDOWS API and unmanaged DLL functions, such as driver software for special types of sensors, in a managed code environment, such as the .NET environment of MICROSOFT VISUAL STUDIO.

Also, note that command components 56 can be controls, as well. For example, one command component 56 can read a motion detector via the DLL function it wraps. Assuming that a return value of that function indicates motion, another command component 56 can be used to call a function that unlocks perimeter doors, sounds alarms, etc.

Further, while the command components 56 provide an advantageous mechanism for obtaining data via WINDOWs API and unmanaged DLL functions, data of interest also may be generated via managed code DLLs of other functions operating within a given software application incorporating one or more of the toolset's components. Data from such sources and others can be input to a given data series component 32 using an "add values" method or function provided in the toolset 12. (In at least one embodiment, the class definition for data series components 32 includes an add values method.)

The add values method can be called programmatically at run-time, for example, and it provides for the direct input of specified data into the data series table 40 of the data series component 32 for which the method is invoked. (The data input by the add values method is processed via the data field components 42 and any data event components 46, like other data incoming to a data series component 32.)

As one example of the add values method use, assume that the desired source of input data for a given data series component 32 is the serial port of a PC (not shown). Serial port data values may be available via functions that do not require wrapping via command components 56. As such, those functions may be called to obtain serial port data and that obtained data may be pushed into a given data series component 32 using the add values method of that given data series component 32.

Of course, the toolset 12 also offers a number of advantageous data output mechanisms as well, which include a number of destination components that serve as targets for output data and, in one or more embodiments, software methods or functions for outputting table data from the data series table 40 of a given data series component 32. For example, at least one embodiment of the toolset 12 includes program code defining a "memory stream" method or function that, on invocation, outputs one or more rows of table data from a data series table of an instantiated data series component 32 as stream data. The ability to stream out a full row of table data in a single stream is advantageous for certain types of data, such as large byte arrays, etc. In at least one such embodiment, the data series component class definition(s) include a memory stream method that can be invoked for any given data series component 32 of interest.

As for defined data destination components, in one or more embodiments, the program code comprising the toolset 12 includes class definitions allowing the programmer to instantiate several different types of data destination components 34. Non-limiting examples of data destination component types include database writer components 60 and file writer components 62.

Each database writer component 60 instantiated within a parent sensor system component 50 allows the exportation of table data from the data series tables 40 of the data series components 32 that are linked to that database writer component 60 through output target components 44. (Note that in an alternate embodiment, output target components 44 are not used, and data destination components 34 include software methods or functions allowing them to be linked to respective data series components 32.)

To facilitate the logging of table data from the linked data series components 32, each database writer component 60 allows the programmer to define the source of the data to be logged, the output parameters, the connection management details, and the database type. An appropriately configured database writer component 60 thus is operative to log data in real-time for a specified data series component 32. Notably, the database writer component 60 automatically creates (if the database table doesn't exist) and inserts data into the database table whenever a row of data gets added to the related data series table 40, assuming that the database writer component 60 is enabled. Moreover, the database connections are automatically opened and closed, and the connection strings and drivers needed to connect to the various database formats are automatically provided depending on the connection type and database type specified. Additional information, such as the username, password, database name, table name, and file path, can be specified within the constructs provided by the database writer component 60.

Similarly, file writer components 62 enable the programmer to output table data from a linked data series component 32, for example, to a target file specified by the programmer. That is, each file writer component 62 instantiated by the programmer enables the exportation of table data to any one or more common data file formats. Each file writer component 62 thus allows the programmer to specify the source of the data to be logged, the output parameters to be used, and the file type involved. With that information, the file writer component 62 automatically creates (if the file doesn't exist) and inserts table data into the data file whenever new table data is added to the data series table 40 of a linked data series component 32.

While the above examples of data source component types and data destination component types provide convenient mechanisms for bringing sensor data into a sensor system component 50, and outputting structured data (table data) from that sensor system component 50, Fig. 6 further illustrates two component types capable of serving as inputs and outputs, namely server components 64 and client components 66.

Broadly stated, one or more embodiments of the toolset 12 include class definitions enabling the programmer to instantiate server components 64 and client components 66, as needed. Each server component 64 and client component 66 is operative to obtain sensor data from user-specified network socket connections, or to send table data from a linked data series table 40 through a user-specified network socket connection. Moreover, each such component supports TCP/IP and UDP communications, for both IPv4 and IPv6. (As will be described later, this capability allows protocol conversion from IPv4 to IPv6 (or vice versa) merely by linking together an appropriately configured client-server component pair.)

In more detail, each server component 64 can send data to and/or receive data from a plurality of specified network addresses, and each server component 64 can be linked to any number of client components 66. (In contrast, each client component 66 either sends data to or receives data from one network address or linked server component 64 at a time. In more detail, each server component can simultaneously maintain multiple network connections, where the client maintains only one network connection at a time. However, because the network connections can be re-specified for servers and clients on the fly, a given client component can connect one-at-a-time to any number of network addresses.) These one-to-many and many-to-one mappings between server components 64 and client components 66 enable complex interlinking between component building blocks, and provide for very sophisticated sensor data processing flows.

For example, a given data series component 32 in a parent sensor system component 50 may be linked to a server component 64 within the same sensor system component 50 (using an output target component 44). Thus, with respect to that given data series component 32, the linked server component 64 operates as a data destination component 34, and automatically receives structured data (table data) as new rows are populated in the data series table 40 of that given data series component 32. In turn, the sensor component 64 can "broadcast" that table data to any number of specified network addresses and/or to any number of linked client components 66, which may be configured as data source components 30 for other data series components 32 in the same sensor system component 50.

Thus a server component 64 can send and receive from any number of network addresses and linked client components 66-it can be configured to do one or both for any given network address or linked client component 66. On the other hand, each client component 66 links to one network address or server component 64 at a time, and either sends or receives data from that one address or server component 64. Consistent with this interlinking framework, a server component 64 can link to any number of data series component 32 as a data source for those data series component 32. Similarly, any number of data series components 32 can target a given server component 64 as a data destination.

In more detail, each instantiated server component 64 allows the programmer to specify the IP addresses of interest, and corresponding details for security mask, port, protocol (UDP or TCP), IP version (v4 or v6), and packet size. Files, messages, byte arrays, and data series table rows can be sent using server components 64 (and client components 66). Security protection can be specified by an IP security mask property of the sever component 64.

Each sever component 64, with its included properties and methods, defines how to output data via TCP or UCP (IPv4 or IPv6) and/or how to receive data via TCP or UDP (IPv4 or IPv6). Among other things, by using server components 64 in conjunction with client components 66, data can be transmitted via TCP or UDP (IPv4 or IPv6) in real-time over LANs and WANs.

The client components 64 offer like functionality, in terms of network connectivity. One significant difference, as mentioned above, however, is that individual client components 64 either send data to or receive data from one connection, e.g., one server component 64, whereas each server component 66 can send data to, and receive data from (or bi-directionally do both) for any number of network connections. Indeed, a server component 64 can be configured such that some of its network connections are inputs, some are outputs, and some are bidirectional. In this manner, table data incoming to a given sensor component 64 can be broadcast to any number of connections.

Helpfully, at least one embodiment of the server and client components 64 and 66 includes software methods allowing each instantiated server component 64 and client component 66 to append a programmer-specified (custom) header to outgoing data. This allows, for example, a given server or client component 64 or 66 to "stamp" the data it is sending, to mark its origin, its state of processing, etc.

In more detail, one or more embodiments of the data series components 32 allow the programmer to set options for header operations. For example, assuming that the input type property of a given data series component 32 has been set to "server" or "client," the configurable options for that data series component 32 will include one or more header options, such as "NONE" (meaning that no processing is performed on the header appended by a source server or client component 64 or 66 to the incoming sensor data), or "CONTAINS" (meaning that some action will or will not be taken depending on the contents of the appended header). One conditional action would be to ignore the incoming sensor data in dependence on the contents of the appended header. Note that this header processing functionality happens "before" the data fields processing performed by the data field components 42.

Turning from the example collection of components that are children of the sensor system component 50, Fig. 6 also illustrates two components included in one or more embodiments of the toolset 12 that are peers with the sensor system component 50, and that provide useful operations involving one or more sensor system components 50. Namely, Fig. 6 illustrates a sensor system group component 68, with its child group data series component 70 and group trigger component 72, and further illustrates a sensor relay component 74.

Put simply, a sensor system group component 68 collects table data from the data series tables 40 in one or more data series components 32 that are of interest, and merges that data into an in-memory group data series table 71 that is generated by its child group data series component 70.

In other words, a sensor system group component 68 is much like a sensor system component 50, except that the inputs to sensor system group components 68 are selected data fields from the data series tables 40 of specified data series components 32 in one or more sensor system components 50. With that similarity, the group data series component 70 is the same or similar to the data series components 32 used in sensor system components 70. Thus, as with the data series components 32 and their respective data field components 42, the group data series component 70 uses data field components 42 to define the schema for collecting data into its group data series table 71.

In general terms, an instantiated sensor system group component 68 provides pick lists or other selection mechanisms for identifying the sensor system components 50 that are of interest for data merging. This selection convenience is further extended by providing selection mechanisms allowing the programmer to identify the data series components 32 within each such sensor system component 50, such that the data series tables 40 that are of interest to the programmer with regards to group data collection may be easily identified.

As will be explained, one or more embodiments of the toolset 12 allow the programmer to configure different types of sensor system group components 68. However, in general, toolset program code enables the instantiation of sensor system group components 68 that are each operative to generate a group data series table 71 in system memory, and to merge user-selected table data from the data series tables 40 of one or more data series components 32 into the group data series table 71.

In one type of sensor system group component 70, referred to as a "bulk-merge" type, the sensor system group component 70 can be commanded (e.g., programmatically commanded at run-time) to collect selected data fields from the same rows in the data series tables 40 in any number of data series components 32, whether the data series components 32 are in one or multiple sensor system components 50.

In more detail, a bulk type sensor system group component 68 allows the grouping of data fields from one or more data series tables 40 based upon primary key(s). With the invocation of a "bulk merge" method, the given sensor system group component 68 merges the contents taken from primary key data fields in the data series tables 40 within any number of specified data series components 32 into a new row in the group data series table 71 of that given sensor system group component 68. More particularly, the contents of primary key data fields in the current row of each specified data series table 40 are collected and populated in a new row of the group data series table 71 upon invocation of a bulk merge.

In support of the above bulk-merge functionality, the data field components 42 can include a primary key property or value enabling the data field component 42 to be designated as a primary key for the data series table of its associated data series component 32. With that designation, the corresponding data field (column) in the data series table 40 of the parent data series component 32 will be identified as a primary key data field.

In another type of sensor system group component 70, data merging is triggered according to triggering conditions defined by the group triggering component 72, which is instantiated as the child of a parent sensor system group component 68. Complementing this arrangement, the class definitions further enable the programmer to instantiate sensor group trigger components 72, each operative to link to a user-specified sensor system group component 68 (e.g., in a parent-child relationship) and to receive user input identifying one or more event conditions to be used as triggers for obtaining the user-selected table data and merging it into the group data series table of the linked sensor system group component 68.

Thus, for a simple group type of sensor system group component 68, the programmer adds group trigger components 72 as desired, to define the event conditions that will trigger the collection of group data from the data series tables 40 of the specified data series components 32. As with a data event component 46, the programmer adds a group trigger component 72 for each event to be defined, and then adds event condition components 48 as children of each group trigger component 72 to define the conditional evaluation test for determining whether the group event will be triggered.

An instantiated sensor system group component 68 can be set to one type or the other via configuration options presented to the programmer. In either case, data automatically is collected into the group data series table 71 when an event-based group trigger instructs the group data series component 70 to add the current values of all the linked data fields of the specified data series tables 40, or when a "bulk merge" method supported by the sensor system group component 68 is invoked, e.g., called in software.

Turning to sensor relay components 74, each instantiated sensor relay component 74 is operative to link a first data series component 32 in one sensor system component 50 to a second data series component 32 in the same or another sensor system component 50, such that the first data series component 32 operates as a data source for the second data series component 32. In other words, each sensor relay component defines a link that allows a data series component 32 residing within one sensor system component to relay table data to another data series component 32 residing in a different sensor system component 50. With a relay link in place, the second data series component 32 automatically receives a new row of table data anytime the first data series component 32 populates a new row of its data series table 40.

By using sensor relay components 74, table data can be passed between different sensor system components 50 using only one server component 64 or client component 66. To understand the advantage of linking data series components 32 in the above manner, as opposed to, for example, linking two client components 66 in the same sensor system component 50 to the same server component 64, one should appreciate that each such client connection uses a connection port. In instances where it is desirable to minimize the number of open connection ports, such as when going through secure network firewalls, strategic use of sensor relay components 74 can minimize the number of open ports needed.

For example, assume that it is desired to send table data out from multiple data series tables 40 through one network connection. To accomplish this, the programmer can use sensor relay components 74 to pass table data from one or more data series components 32 into another data series component 32 (in or across sensor system components 50), such that that other data series component 32 effectively collects the data from the other relay-linked data series components 32. In turn, table data from that data series component 32 can be output to one client component 64.

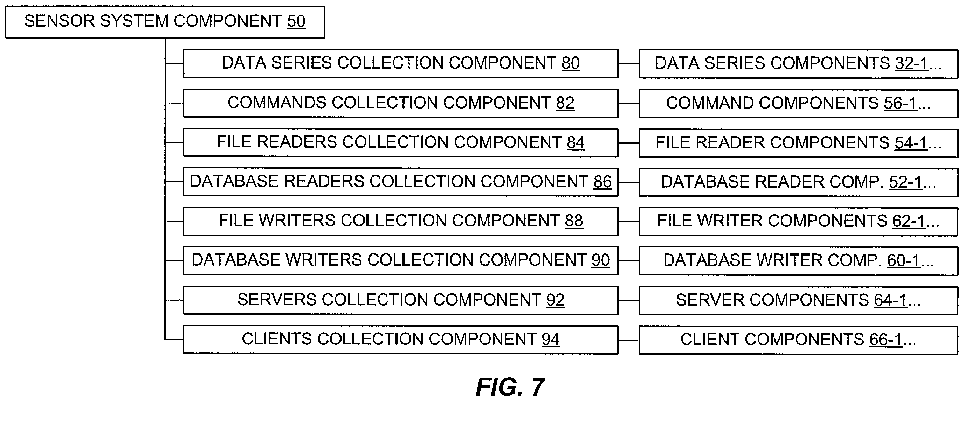

Fig. 7 provides further details for the object model organization of the sensor system component 50, as embodied in one or more embodiments of the toolset 12. Here, the class definitions included in the toolset 12 include a number of "collections" components, that serve as convenient collection devices for adding the desired number of a given type of component to a given sensor system component 50.

For example, Fig. 7 illustrates a data series collection component 80 as a child of a parent sensor system component 50. The data series collection component 80 is addable to the parent sensor system component 50 and is operative to allow the programmer to add individual data series components 32 (e.g., 32-1...) as desired to the parent sensor system component 50, wherein each data series component 32 is linkable by the programmer to one data source component 30 within the parent sensor system component 50 and is operative to collect sensor data from the linked data source component 30 into its in-memory data series table 40.

Further, while not illustrated, the toolset 12 may provide a data fields collection component addable to a parent data series component 32 and operative to allow the programmer to add individual data field components 42 as desired to the parent series component 32, each said data field component 42 operative to define a data field in the data series table 40 of the parent data series component 32.

The figure further illustrates several examples of a data sources collection component, which is addable to the parent sensor system component 50 and is operative to allow the programmer to add individual data source components 30 as desired to the parent sensor system component 50, each said data source component 30 acting as a source of sensor data. Here the data sources collection component is not generically represented, but rather is represented by specific examples of data sources collection components.

For example, one sees that a data sources collection component may comprise a commands collection component 82 that is addable to the parent sensor system component 50 and is operative to allow the programmer to add command components 56 (e.g., 56-1...) as desired to the parent sensor system component 50, each said command component 56 operative to wrap a WINDOWS API function or an unmanaged DLL as a data source component 30 within the parent sensor system component 50, such that the WINDOWS API function or unmanaged DLL acts as a source of sensor data within the parent sensor system component 50.

As another example, one sees that the data sources collection component may comprise a file readers collection component 84. This component is operative to allow the programmer to add file reader components 54 (e.g., 54-1...) as desired to the parent sensor system component 50, each file reader component 54 linkable to a target file by the programmer and operative to read data from the target file, such that the target file acts as a source of sensor data.

The data sources collection component additionally or alternatively may comprise a database readers collection component 86 operative to allow the programmer to add database reader components 52 (e.g., 52-1...) as desired to the parent sensor system component 50, each database reader component 52 linkable to a target database by the programmer and operative to read data from the target database, such that the target database acts as a source of sensor data.

Further, in at least one embodiment, the toolset 12 may be defined as a web services data source component that operates much like the command components 56. However, where command components 56 obtain data by wrapping API/DLL functions, the web services components obtain data via web applications.

Turning from data sources to data destinations, the sensor system component 50 may include a data destinations collection component addable to a parent sensor system component 50, which is operative to allow the programmer to add individual data destination components 34 as desired to the parent sensor system component 50, each said data destination component 34 linkable by the programmer to any number of data series components 32 within the parent sensor system component 50 and operative to receive the sensor data collected by the linked data series components 32.

As with the data sources collection component, Fig. 7 does not illustrate a generic data destinations collection component, but rather illustrates several specific examples, any or all of which may be included in the parent sensor system component 50. As a first example, the figure illustrates that the data destinations collection component may comprise a file writers collection component 88 operative to allow the programmer to add file writer components 62 (e.g., 62-1...) as desired to the parent sensor system component 50. Each file writer component 62 is linkable to a target file by the programmer and operative to write sensor data from any linked data series components 32 to the target file, such that the target file acts as a destination for sensor data collected by the linked data series components 32.

Additionally, or alternatively, the data destinations collection component may comprise a database writers collection component 90 operative to allow the programmer to add database writer components 60 (e.g., 60-1...) as desired to the parent sensor system component 50. Each database writer component 60 is linkable to a target database by the programmer and operative to write sensor data from any linked data series components 32 to the target database, such that the target database acts as a destination for sensor data collected by the linked data series components 32.

The figure further illustrates (as a data sources collection component and/or as a data destinations collection component) a servers collection component 92 that is addable to the parent sensor system component 50 and operative to allow the programmer to add server components 64 (e.g., 64-1...) as desired to the parent sensor system component 50. Each server component 64 is configurable by the programmer to operate as a data source component 30 and/or data destination component 34. That is, each server component 64 supports multiple simultaneous network connections and can send and/or receive data from any one or all of those connections.

The figure further illustrates (as a data sources and/or data destinations collection component) a clients collection component 94 that is addable to the parent sensor system component 50 and operative to allow the programmer to add client components 66 (e.g., 66-1...) as desired to the parent sensor system component 50. Each client component 66 is configurable by the programmer to operate as a data source component 30 receiving data from a specified network address or as a data destination component 34 sending data to a specified network address. Note that at least one embodiment of client components 66 allows a given client component 66 to be configured with multiple connection configurations, e.g., a list of network address, but only one such connection is active at a time. However, during run-time execution, the active address of a given client component 66 can be changed or updated to change what it is connected with.

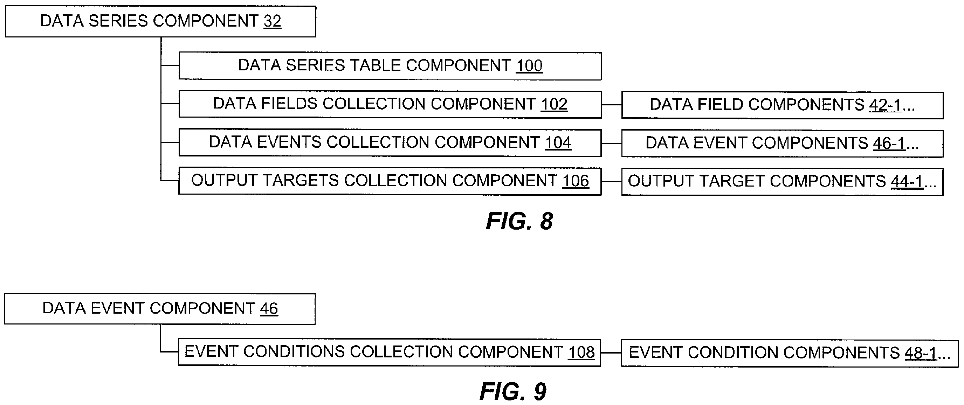

Continuing with non-limiting examples of the object models adopted for the component building blocks of the toolset 12, Figs. 8 and 9 illustrate object models for the data series component 32 and the data event component 46. With respect to Fig. 8, one sees an example, wherein the data series component 32 includes a data series table component 100, which offers methods and properties for building and accessing the data series table 40 generated by each instantiated data series component 32. The model further includes a data fields collection component 102, operative to allow the programmer to add as many data field components 42 (e.g., 42-1...) as desired for defining the schema to be used for structuring data stored in the data series table 40.

The model further includes a data events collection component 104, operative to allow the programmer to add data event components 46 (e.g., 46-1...) as desired, to a parent data series component 32. Likewise, the model further includes an output targets collection component 106, operative to allow the programmer to add output target components 44 (e.g., 44-1...) as desired, to a parent data series component 32.

Referring now to Fig. 9, one sees that in the illustrated object model an event conditions collection component 108 may be instantiated as a child of a parent data event component 46. The event conditions collection component 108 is operative to allow the programmer to add event condition components 48 (e.g., 48-1...) as desired, to a parent data event component 46.

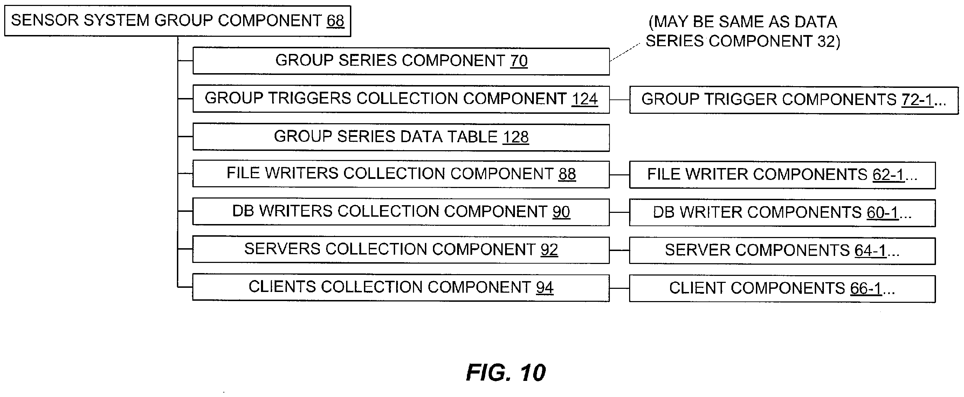

Continuing with object model examples, Fig. 10 illustrates an object model that may be used by the toolset 12 for the sensor system group component 68. In addition to the sensor system group components that have already been discussed, the object model illustrates a group triggers collection component 124, which is operative to allow the programmer to add group trigger components 72 (e.g., 72-1...) as desired to a parent sensor system group component 68.

The model further includes a group data series table component 128, which functions much like the data series table component 100 of the data series component 32-i.e., it provides for generation and manipulation of the group data series table generated by each instantiated sensor system group component 68.

Of course, other object models with other parent-child relationships may be used, in at least some instances, to effect the same or similar functionality in the toolset 12. Notably, for any given hierarchical component model, one or more embodiments of the toolset 12 include program code supporting component copying, which may be referred to as a "cloning" function that can be performed at design time, and can be invoked programmatically at run time. With component cloning, the toolset 12 generates a complete copy of a selected component (or of selected groups of components), wherein the copied components include all of the configured details (option settings, values, etc.) of the original component(s).

As a further convenience, at least one embodiment of the toolset 12 includes program code supporting component serialization and de-serialization. More particularly, the toolset 12 may include program code to serialize and de-serialize an instantiated component, and any components contained therein, to and from an XML file.

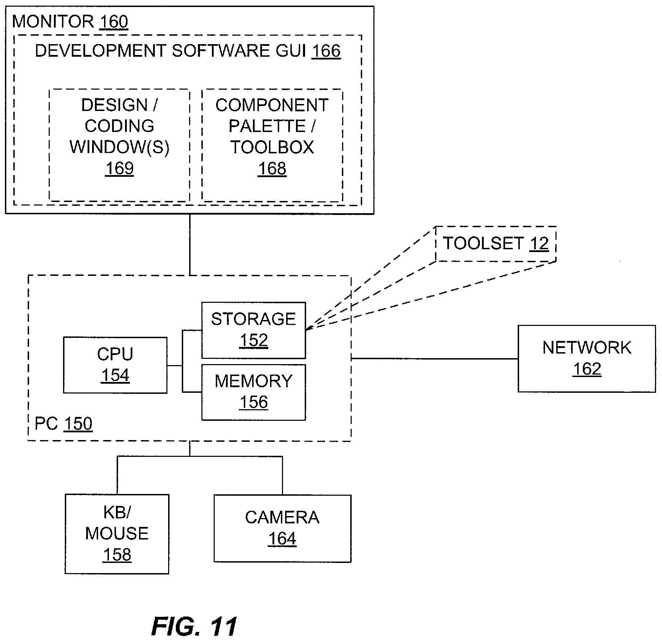

Turning from implementation details to a practical, although non-limiting, example of using the toolset 12, Fig. 11 depicts PC (personal computer) 150 that is configured for development of a sensor-enabled software application using an embodiment of the toolset 12, which may be held in installed form in a storage device 152 of the PC 150. The PC 150 further includes a CPU (central processing unit) 154, system or working memory 156 (e.g., DRAM), and is connected to keyboard and mouse peripherals 158 and a monitor 160. The PC 150 also may be connected to a network 162 and, of particular interest for this example, an external camera 164 (e.g., a USB-connected camera device).

As a non-limiting example of developing sensor-enabled software applications, the toolset 12 and/or supporting operating system and development software installed on the PC 150 provide a GUI 166, which provides one or more programming windows and provides access to the sensor component building blocks of the toolset 12. For example, the GUI 166 may display a component palette/toolbox 168, which provides for convenient selection and instantiation of the sensor components included in the toolset 12. The GUI 166 also may provide design and coding windows 169, which provide for graphically-based "forms" design and other drag-and-drop design operations, as well as code editing windows.

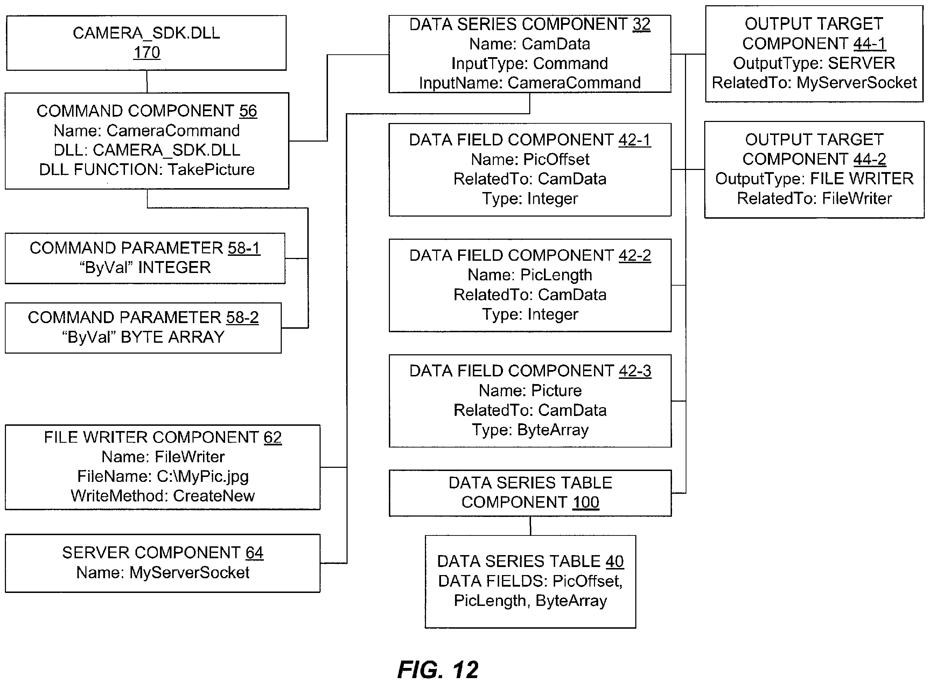

With the above development system Fig. 12 provides one example use of the toolset 12, wherein selected sensor components within the toolset are used to obtain data as desired from the attached camera 164. First, one may assume that the camera manufacturer provides driver software for the camera and that such software is installed on the PC 150. In the diagram, the DLL "CAMERA_SDK.DLL" 170 represents the unmanaged DLL to be used for interfacing with the camera 164.

To wrap this unmanaged DLL-i.e., to use the unmanaged DLL within a managed code environment, such as the .NET framework of VISUAL STUDIO, the programmer instantiates a command component 56, sets it name to "CameraCommand" for example, and links it to a "take picture" function of the camera DLL (DLL = CAMERA_SDK.DLL, DLL FUNCTION = TakePicture). Because the TakePicture function to be exercised by the command component 56 returns two parameters (integer data and the picture itself as a ByteArray), the programmer instantiates two child command parameter components 58-1 and 58-2. The first command parameter component 58-1 is configured for integer data and the second command parameter component 58-2 is configured for ByteArray data.

The programmer then links an instantiated data series component 32 to the command component 56. That is, the programmer configures the data series component to link to the command component 56 as its data source component 30, such that the data series component receives camera data from the command component 56 as its incoming sensor data. Further, the programmer instantiates three data field components 42-1, 42-2, and 42-3, that control the collection of camera data in the data series table 40, while the data series table component 100 creates/manages the data series table 40 into which the camera data is stored, as structured by the field data components 42-1, 42-2, and 42-3.

Further, assuming that the programmer desires to output table data from the data series table 40 to a network connection and to a data file, the programmer instantiates two output target components 44-1 and 44-2, one linking the data series component 32 with a file writer component 62 ("FileWriter"), and the other linking the data series component 32 with a server component 64 ("MyServerSocket"). The server component 64 is configured with the appropriate network connection information (addresses), while the file writer component 62 is configured with the desired file name and desired method(s) of writing data to the file.

With the above configuration, the software application or system in which the toolset components are included can initiate a data read from the camera 164 by calling a read method provided by the command component 56. In response, the command component 56 calls the TakePicture function as defined by the CAMERA_SDK.DLL, and the command parameter components 58-1 and 58-2 allow the resulting camera data to be passed to the data series component 32.

The data series component 32 automatically adds a new data series (row) to its data series table 40 responsive to the newly incoming camera data, subject to the filtering/parsing and, optionally, data conversion operations, of the data field components 42-1, 42-2, and 42-3. Further, the newly added table data is passed along from the data series component 32 to the specified data destinations (file writer component 62 and server component 64), as linked to the data series component via the output target components 44-1 and 44-2. In turn, that data is written to the specified file by the file writer component 62 to the targeted data file, and is sent by the server component 64 to the targeted network addresses.

Those skilled in the art should appreciate that the above example represents the linking to an unmanaged DLL for camera control and data retrieval, the structuring and formatting of the resultant camera data in an automatically-updated, in-system memory table, and the automatic passing of data from that table to a data file and any number of network connections, all without requiring the programmer to write a single line of program code. In this instance, and in significantly more complicated scenarios, the toolset 12 thus represents a potentially enormous timesaver for programmers. Further, the toolset 12 enhances application robustness and simplicity by providing standard component building blocks that include components and properties enabling straightforward interlinking between components.

With the above and other examples in mind, and considering the toolset 12 in its various embodiments, those skilled in the art should keep in mind that, broadly, the toolset 12 provides an apparatus and method of facilitating the rapid development of sensor-enabled software applications. In at least one such embodiment, the toolset 12 supports a method of rapidly developing sensor-enabled software applications comprising providing software component class definitions for a plurality of sensor-related software components.

The class definitions include definitions for a data source component linkable to a specified source of sensor data and operative to obtain incoming sensor data from the specified source, such that a programmer adds a data source component for each source of sensor data of interest.

The class definitions further include a data series component linkable to a specified data source component and operative to generate an in-memory data series table and to automatically collect incoming sensor data from the linked data source component in its data series table, such that the programmer adds as many data series components as desired for collecting the incoming sensor data from a given data source component.

The class definitions further include a data field component operative to define a data field in the data series table of an associated data series component according to programmer-selected properties, and to thereby control automatic population of that data field by the associated data series component, such that, for each given data series component, the programmer adds as many data field components as there are desired data fields for the data series table of that given data series component.

The class definitions further include a data destination component linkable to one or more specified data series components and operative to receive table data from the data series tables of the linked data series components, such that the programmer adds as many data destination components as desired, and links each data destination component to as many data series components as desired.

Still further, the class definitions include a sensor system component operative as a container for related collection of data source, data destination, data series, and data field components, such that the programmer instantiates a sensor system component and adds data source, data destination, data series, and data field components as desired.

Still further, the class definitions include a sensor system group component linkable to a number of sensor system components and operative to generate an in-memory group data series table and merge specified table data from specified ones of the data series tables in the linked sensor system components into its group data series table.

Still further, the class definitions include a sensor relay component operative to link a first data series component contained within a first sensor system component to a second data series component contained within the same or a second sensor system component, such that the first data series component operates as a data source component for the second data series component.

Still further, the class definitions include a data event component that is operative to conditionally catch or filter incoming sensor data for an associated data series component according to one or more specified triggering conditions, such that, for a given data series component, the programmer adds as many data event components as there are desired conditional catching or filtering operations to be conditionally triggered for the incoming sensor data. Complementing that functionality, the class definitions further include an event condition component operative to define a programmer-specified triggering condition for an associated series data event, such that the programmer builds an associated set of triggering conditions for a given data event component by adding and configuring a corresponding number of event condition components.

Still further, the class definitions include server components and client components, wherein each server component is linkable by the programmer as a data destination component or as a data source component for one or more specified client components, and wherein each client component is linkable by the programmer as a data destination component or a data source component to a specified server component. According to these class definitions in one or more embodiments, the server and client components include, within each such definition, software methods or functions supporting TCP/IP or UDP based network communications, using either or both IPv4 and IPv6.

Further according to these definitions, the server component is linkable by the programmer to any number of specified network addresses, and is operative to act as a data source component or as a data destination component for individual ones of the specified network addresses. Similarly, according to these class definitions, the client component is linkable by the programmer to a specified network address, and is operative to act as a data source component or as a data destination component for the specified network address.

Still further, the class definitions include at least one of a file reader component operative to read sensor data from a specified data file, a database reader component operative to read sensor data from a specified database, a command component operative to wrap a specified WINDOWS API function or unmanaged DLL and obtain sensor data via the specified WINDOWS API or unmanaged DLL. Complementing these functions, the class definitions may further include a command parameter component operative to allow the programmer to specify function parameters or arguments for obtaining sensor data via the specified WINDOWS API or unmanaged DLL, i.e., by specifying a particular command component, such that the command parameter component passes the specified parameter to that command component for use with the API or DLL wrapped by that command component.

Still further, in one or more embodiments of the toolset 12, one or more of the toolset components (e.g., data series components 32, command components 56, etc.) include programmatic hooks, allowing programmatic extension of their behavior and/or modification of their behavior. For example, program code can, via one or more hooks, inspect or update property values and other configuration settings of a given component. One example would be the run-time modification of network address information for a server component or a client component 64 or 66. Another example would be the additional proprietary compression or encryption code, either to a data series component 32 or to a data destination component 34.

Also, as a general point, those skilled in the art should appreciate that the toolset 12 can be implemented as an add-in for an IDE, or implemented as a standalone development system. By way of non-limiting examples, the toolset 12 can be implemented as a standalone application for the WINDOWS, MAC OS X, LINUX, and UNIX operating systems (and variants thereof), and can be implemented as an IDE add-in for MICROSOFT VISUAL STUDIO, ECLIPSE (open source), NETBEANS (SUN MICROSYSTEMS), WEBSPHERE (IBM), and other IDEs.

Whether configured as an IDE add-in or as a development application in its own right, the toolset 12 offers a powerful set of sensor-related component class definitions allowing the programmer to instantiate the number and types of sensor-related components needed for a particular application, and to interlink and configure these components to define the desired sensor-data processing flows.

With the above in mind, those skilled in the art will appreciate that the present invention is limited only by the following claims and their legal equivalents.

## Claims

1. A method for developing sensor-enabled software applications on a computer system (150) using a component-based software tool-set (12), the method comprising the steps of:
- providing a user interface on the computer system to receive user inputs;
- defining on the computer system (150) in response to the user inputs at least one sensor system component (50) operative to contain a related collection of data source components (30), data series components (32), command components (56), and data field components (42);
- instantiating the data source components (30) operative to obtain sensor data from one or more sensors (28, 164), the data series components (32) operative to collect the sensor data from the data source components (30), one or more command components (56) operative to wrap a user-specified WINDOWS API or unmanaged DLL function, such that the user-specified function operates as a data source component (30), and the data field components (42) operative to control the collection of the sensor data by the data series components (32);
- adding one or more of the data series components (32) to the sensor system component (50) in response to user inputs and linking each of the added data series components (32) to at least one of the data source components (30) within the sensor system component (50), wherein each of the added data series components (32) collects the sensor data from its linked data source component (30) by generating a data series table (40) in a system memory (152) of the computer system (150) and automatically populating rows in the data series table (40) with sensor data from the linked data source component (30); and
- adding one or more of the data field components (42) to the sensor system component (50) in response to user inputs, wherein each added data field component (42) links to at least one of the data series components (32) within the sensor system component (50) and controls the collection of the sensor data from its linked data series component (32) by mapping sub-data within the sensor data to a particular column in the data series table (40) according to one or more user-identified properties.

2. The method of claim 1, further comprising linking a first given data series component (32) to a second given data series component (32) instantiated within the same sensor system component (50), such that the first given data series component (32) acts as the data source component (30) for the second given data series component (32).

3. The method of claim 2, further comprising the step of defining the data source components (30) and the data series components (32) as child classes of the sensor system component (50), and defining each data field component (42) as a child class of the respective data series component (32).

4. The method of claim 1, further comprising instantiating one or more client components (66) operative to obtain sensor data from user-specified network socket connections and/or to send sensor data to user-specified network socket connections.

5. The method of claim 1, further comprising instantiating one or more sensor system group components (68), each operative to generate a group data series table in the system memory, and to merge user-selected table data from the data series tables (40) generated by the data series components (42) in one or more sensor system components (50) into the group data series table.

6. The method of claim 1, further comprising performing a dynamic data type conversion, thereby enabling a given data field component (42) to convert incoming sub-data from its native data type to a user- specified data type as part of storing the incoming sub-data in the data series table (40) of the data series component (32) to which the given data field component (42) is linked.

7. The method of claim 1, further comprising instantiating one or more data destination components (34) operative to receive sensor data passed through linked data series components (32), and in response to user inputs adding data destination components (34) to the sensor system component (50) and linking a particular data series component (32) to one or more data destination components (34).

8. The method of claim 1, further comprising instantiating one or more data event components (46) that link to corresponding data series components (32), each data event component (46) operative to provide conditional catching and filtering actions for new sensor data incoming to the linked data series component (32) according to one or more user-defined conditions, before the data series component (32) populates a new row in its data series table (40) with the new sensor data.

9. A computer-readable storage medium having recorded thereon program code that, when executed on a computer, performs the method of any preceding claim.

10. A computer (150) configured for development of a sensor-enabled software application, the computer (150) comprising:
- a storage device (152) arranged to store at least one sensor system component (50) operative to contain a related collection of data source components (30), data series components (32), command components (56), and data field components (42), wherein the data source components (30) are operative to obtain sensor data from one or more sensors (28, 164), the data series components (32) are operative to collect the sensor data from the data source components (30), the command components (56) are operative to wrap a user-specified WINDOWS API or unmanaged DLL function, such that the user-specified function operates as a data source component (30), and the data field components (42) are operative to control the collection of the sensor data by the data series components (32); and
- a user interface (166) arranged to instantiate the related collection of data source components (30), data series components (32), command components (56), and data field components (42) in response to user inputs;
wherein the user interface (166) is arranged to add one or more of the data series components (32) to the sensor system component (50) in response to user inputs and link each of the added data series components (32) to at least one of the data source components (30) within the sensor system component (50),
wherein each of the added data series components (32) collects the sensor data from its linked data source component (30) by generating a data series table (40) in the storage device (152) and automatically populating rows in the data series table (40) with sensor data from the linked data source component (30); and
wherein the user interface (166) is arranged to add one or more of the data field components (42) to the sensor system component (50) in response to user inputs, wherein each added data field component (42) links to at least one of the data series components (32) within the sensor system component (50) and controls the collection of the sensor data from ist linked data series component (32) by mapping sub-data within the sensor data to a particular column in the data series table (40) according to one or more user-identified properties.

## Patentansprüche

1. Verfahren zur Entwicklung sensoraktivierter Software-Anwendungen auf einem Computersystem (150) mittels eines komponentenbasierten Software-Toolsatzes (12), wobei das Verfahren die Schritte umfasst:
- Bereitstellen einer Benutzerschnittstelle auf dem Computersystem zum Empfangen von Benutzereingaben;
- Definieren wenigstens einer Sensorsystem-Komponente (50) auf dem Computersystem (150) als Reaktion auf die Benutzereingaben, die dazu ausgelegt ist, eine zugehörige Sammlung von Datenquellen-Komponenten (30), Datenreihen-Komponenten (32), Befehlskomponenten (56) und Datenfeld-Komponenten (42) zu enthalten;
- Instanziieren der Datenquellen-Komponenten (30), die dazu ausgelegt sind, Sensordaten von einem oder mehreren Sensoren (28, 164) zu erhalten, der Datenreihen-Komponenten (32), die dazu ausgelegt sind, die Sensordaten von den Datenquellen-Komponenten (30) zu erheben, einer oder mehrerer Befehlskomponenten (56), die dazu ausgelegt sind, eine benutzerspezifizierte WINDOWS-API oder eine nicht verwaltete DLL-Funktion zu umschließen, so dass die benutzerspezifizierte Funktion als Datenquellen-Komponente (30) arbeitet, und der Datenfeld-Komponenten (42), die dazu ausgelegt sind, die Erhebung der Sensordaten durch die Datenreihen-Komponenten (32) zu steuern;
- Hinzufügen einer oder mehrerer der Datenreihen-Komponenten (32) zur Sensorsystem-Komponente (50) als Reaktion auf Benutzereingaben und Verknüpfen jeder der hinzugefügten Datenreihen-Komponenten (32) mit wenigstens einer der Datenquellen-Komponenten (30) in der Sensorsystem-Komponente (50), wobei jede der hinzugefügten Datenreihen-Komponenten (32) die Sensordaten von ihrer verknüpften Datenquellen-Komponente (30) erhebt, indem sie eine Datenreihen-Tabelle (40) in einem Systemspeicher (152) des Computersystems (150) erzeugt und automatisch Zeilen in der Datenreihen-Tabelle (40) mit Sensordaten der verknüpften Datenquellen-Komponente (30) befüllt, und
- Hinzufügen einer oder mehrerer der Datenfeld-Komponenten (42) zur Sensorsystem-Komponente (50) als Reaktion auf Benutzereingaben, wobei sich jede hinzugefügte Datenfeld-Komponente (42) mit wenigstens einer der Datenreihen-Komponenten (32) in der Sensorsystem-Komponente (50) verknüpft und die Erhebung der Sensordaten von ihrer verknüpften Datenreihen-Komponente (32) durch Abbilden von Unterdaten innerhalb der Sensordaten auf eine bestimmte Spalte in der Datenreihen-Tabelle (40) gemäß einer oder mehreren benutzeridentifizierten Eigenschaften steuert.

2. Verfahren nach Anspruch 1, ferner umfassend das Verknüpfen einer ersten gegebenen Datenreihen-Komponente (32) mit einer zweiten gegebenen Datenreihen-Komponente (32), die in derselben Sensorsystem-Komponente (50) instanziiert wurden, so dass die erste gegebene Datenreihen-Komponente (32) als Datenquellen-Komponente (30) für die zweite gegebene Datenreihen-Komponente (32) dient.

3. Verfahren nach Anspruch 2, ferner umfassend den Schritt des Definierens der Datenquellen-Komponenten (30) und der Datenreihen-Komponenten (32) als Kindklassen der Sensorsystem-Komponente (50), und des Definierens jeder Datenfeld-Komponente (42) als Kindklasse der jeweiligen Datenreihen-Komponente (32).

4. Verfahren nach Anspruch 1, ferner umfassend die Instanziierung einer oder mehrerer Client-Komponenten (66), die dazu ausgelegt ist/sind, Sensordaten von benutzerspezifizierten Netzwerk-Socket-Anschlüssen zu erhalten und/oder Sensordaten an benutzerspezifizierte Netzwerk-Socket-Anschlüsse zu senden.

5. Verfahren nach Anspruch 1, ferner umfassend die Instanziierung einer oder mehrerer Sensorsystem-Gruppenkomponenten (68), die jeweils dazu ausgelegt sind, eine Gruppen-Datenreihen-Tabelle im Systemspeicher zu erzeugen und vom Benutzer ausgewählte Tabellendaten aus der von den Datenreihen-Komponenten (42) in einer oder mehreren Sensorsystem-Komponenten (50) erzeugten Datenreihen-Tabelle (40) in der Gruppen-Datenreihen-Tabelle zusammenzuführen.

6. Verfahren nach Anspruch 1, ferner umfassend die Durchführung einer dynamischen Datentyp-Umwandlung, um dadurch einer gegebenen Datenfeld-Komponente (42) zu ermöglichen, eingehende Unterdaten von ihrem nativen Datentyp in einen benutzerspezifizierten Datentyp als Teil des Speicherns der eingehenden Unterdaten in der Datenreihen-Tabelle (40) der Datenreihen-Komponente (32), mit der die gegebene Datenfeld-Komponente (42) verknüpft ist, umzuwandeln.

7. Verfahren nach Anspruch 1, ferner umfassend die Instanziierung einer oder mehrerer Datenziel-Komponenten (34), operativ zum Empfangen von Sensordaten, die durch verknüpfte Datenreihen-Komponenten (32) geleitet werden, und, als Reaktion auf Benutzereingaben, das Hinzufügen von Datenziel-Komponenten (34) zur Sensorsystem-Komponente (50) und das Verknüpfen einer bestimmten Datenreihen-Komponente (32) mit einer oder mehreren Datenziel-Komponenten (34).

8. Verfahren nach Anspruch 1, ferner umfassend die Instanziierung einer oder mehrerer Datenereignis-Komponenten (46), die mit entsprechenden Datenreihen-Komponenten (32) verknüpft sind, wobei jede Datenereignis-Komponente (46) dazu ausgelegt ist, bedingte Datenerfassungs- und -filteraktionen für neue Sensordaten, die in der verknüpften Datenreihen-Komponente (32) eingehen, nach einer oder mehreren benutzerdefinierten Bedingungen bereitzustellen, bevor die Datenreihen-Komponente (32) eine neue Zeile in ihrer Datenreihen-Tabelle (40) mit den neuen Sensordaten befüllt.

9. Computer-lesbares Speichermedium, auf dem Programmcode gespeichert ist, der bei Ausführung auf einem Rechner das Verfahren nach einem vorhergehenden Anspruch durchführt.

10. Rechner (150), der zur Entwicklung einer sensoraktivierten Software-Anwendung ausgelegt ist, wobei der Rechner (150) umfasst:
- eine Speichervorrichtung (152), die dazu angeordnet ist, wenigstens eine Sensorsystem-Komponente (50) zu speichern, die dazu ausgelegt ist, eine zugehörige Sammlung von Datenquellen-Komponenten (30), Datenreihen-Komponenten (32), Befehlskomponenten (56) und Datenfeld-Komponenten (42) zu speichern, wobei die Datenquellen-Komponenten (30) dazu ausgelegt sind, Sensordaten von einem oder mehreren Sensoren (28, 164) zu erhalten, die Datenreihen-Komponenten (32) dazu ausgelegt sind, die Sensordaten von den Datenquellen-Komponenten (30) zu erheben, die Befehlskomponenten (56) dazu ausgelegt sind, eine benutzerspezifizierte WINDOWS-API oder eine nicht verwaltete DLL-Funktion zu umschließen, so dass die benutzerspezifizierte Funktion als Datenquellen-Komponente (30) arbeitet, und die Datenfeld-Komponenten (42) dazu ausgelegt sind, die Erhebung der Sensordaten durch die Datenreihen-Komponenten (32) zu steuern, und
- eine Benutzerschnittstelle (166), die zur Instanziierung der zugehörigen Sammlung von Datenquellen-Komponenten (30), Datenreihen-Komponenten (32), Befehlskomponenten (56) und Datenfeld-Komponenten (42) als Reaktion auf Benutzereingaben angeordnet ist;
wobei die Benutzerschnittstelle (166) dazu angeordnet ist, eine oder mehrere der Datenreihen-Komponenten (32) zur Sensorsystem-Komponente (50) als Reaktion auf Benutzereingaben hinzuzufügen und jede der hinzugefügten Datenreihen-Komponenten (32) mit wenigstens einer der Datenquellen-Komponenten (30) in der Sensorsystem-Komponente (50) zu verknüpfen,
wobei jede der hinzugefügten Datenreihen-Komponenten (32) die Sensordaten von ihrer verknüpften Datenquellen-Komponente (30) erhebt, indem sie eine Datenreihen-Tabelle (40) in der Speichervorrichtung (152) erzeugt und automatisch Zeilen in der Datenreihen-Tabelle (40) mit Sensordaten der verknüpften Datenquellen-Komponente (30) befüllt, und
wobei die Benutzerschnittstelle (166) dazu angeordnet ist, eine oder mehrere der Datenfeld-Komponenten (42) zur Sensorsystem-Komponente (50) als Reaktion auf Benutzereingaben hinzuzufügen,wobei sich jede hinzugefügte Datenfeld-Komponente (42) mit wenigstens einer der Datenreihen-Komponenten (32) in der Sensorsystem-Komponente (50) verknüpft und die Erhebung der Sensordaten von ihrer verknüpften Datenreihen-Komponente (32) durch Abbilden von Unterdaten innerhalb der Sensordaten auf eine bestimmte Spalte in der Datenreihen-Tabelle (40) gemäß einer oder mehrerer benutzeridentifizierter Eigenschaften steuert.

## Revendications

1. Procédé de développement d'applications logicielles activées par capteurs sur un système informatique (150) en utilisant un ensemble d'outils logiciels basés sur des composants (12), le procédé comprenant les étapes consistant à :
- fournir une interface utilisateur sur le système informatique pour recevoir des entrées de l'utilisateur ;
- définir sur le système informatique (150), en réponse aux entrées de l'utilisateur, au moins un composant de système de capteur (50) fonctionnel pour contenir une collection associée de composants de source de données (30), de composants de série de données (32), de composants de commande (56) et de composants de champ de données (42) ;
- instancier les composants de source de données (30) fonctionnels pour obtenir des données de capteur à partir d'un ou plusieurs capteurs (28, 164), les composants de série de données (32) fonctionnels pour collecter les données de capteur à partir des composants de source de données (30), un ou plusieurs composants de commande (56) fonctionnels pour envelopper une API WINDOWS spécifiée par l'utilisateur ou une fonction DLL non gérée, de telle sorte que la fonction spécifiée par l'utilisateur fonctionne comme un composant de source de données (30), et les composants de champ de données (42) fonctionnels pour commander la collecte des données de capteur par les composants de série de données (32) ;
- ajouter un ou plusieurs des composants de série de données (32) au composant de système de capteur (50) en réponse aux entrées de l'utilisateur et lier chacun des composants de série de données ajoutés (32) à au moins un des composants de source de données (30) dans le composant de système de capteur (50), chacun des composants de série de données ajoutées (32) collectant les données de capteur à partir de son composant de source de données lié (30) en générant un tableau de séries de données (40) dans une mémoire système (152) du système informatique (150) et en remplissant automatiquement des lignes dans le tableau de séries de données (40) avec des données de capteur à partir du composant de source de données lié (30) ; et
- ajouter un ou plusieurs des composants de champ de données (42) au composant de système de capteur (50) en réponse aux entrées de l'utilisateur, chaque composant de champ de données ajouté (42) étant lié à au moins un des composants de série de données (32) dans le composant de système de capteur (50) et commandant la collecte des données de capteur à partir de son composant de série de données lié (32) en établissant une correspondance entre des sous-données dans les données de capteur et une colonne particulière du tableau de séries de données (40) en fonction d'une ou plusieurs propriétés identifiées par l'utilisateur.

2. Procédé selon la revendication 1, consistant en outre à lier un premier composant de série de données donné (32) à un second composant de série de données donné (32) instancié dans le même composant de système de capteur (50), de telle sorte que le premier composant de série de données donné (32) agit en tant que composant de source de données (30) pour le second composant de série de données donné (32).

3. Procédé selon la revendication 2, comprenant en outre l'étape consistant à définir les composants de source de données (30) et les composants de série de données (32) en tant que classes enfant du composant de système de capteur (50) et à définir chaque composant de champ de données (42) en tant que classe enfant du composant de série de données respectif (32).

4. Procédé selon la revendication 1, consistant en outre à instancier un ou plusieurs composants clients (66) fonctionnels pour obtenir des données de capteur à partir de connexions de socket réseau spécifiées par l'utilisateur et/ou pour envoyer des données de capteur à des connexions de socket réseau spécifiées par l'utilisateur.

5. Procédé selon la revendication 1, consistant en outre à instancier un ou plusieurs composants de groupe de système de capteurs (68), dont chacun est fonctionnel pour générer un tableau de séries de données de groupe dans la mémoire système, et pour fusionner les données de tableau sélectionnées par l'utilisateur à partir des tableaux de séries de données (40) générés par les composants de série de données (42) dans un ou plusieurs composants de système de capteurs (50) dans le tableau de séries de données de groupe.

6. Procédé selon la revendication 1, comprenant en outre l'exécution d'une conversion de type de données dynamique, permettant ainsi à un composant de champ de données donné (42) de convertir des sous-données entrantes de son type de données natif en un type de données spécifié par l'utilisateur lors du stockage des sous-données entrantes dans le tableau de séries de données (40) du composant de série de données (32) auquel le composant de champ de données donné (42) est lié.

7. Procédé selon la revendication 1, consistant en outre à instancier un ou plusieurs composants de destination de données (34) fonctionnels pour recevoir des données de capteur transmises par des composants de série de données liés (32) et, en réponse à des entrées de l'utilisateur, ajouter des composants de destination de données (34) au composant de système de capteur (50) et lier un composant de série de données particulier (32) à un ou plusieurs composants de destination de données (34).

8. Procédé selon la revendication 1, consistant en outre à instancier un ou plusieurs composants d'événement de données (46) qui sont liés à des composants de série de données correspondants (32), chaque composant d'événement de données (46) étant fonctionnel pour fournir des actions conditionnelles de capture et de filtrage pour de nouvelles données de capteur entrant dans le composant de série de données lié (32) en fonction d'une ou plusieurs conditions définies par l'utilisateur, avant que le composant de série de données (32) ne remplisse une nouvelle ligne dans son tableau de séries de données (40) avec les nouvelles données de capteur.

9. Support de stockage lisible par ordinateur sur lequel est enregistré un code de programme qui, lorsqu'il est exécuté sur un ordinateur, met en oeuvre le procédé selon l'une quelconque des revendications précédentes.

10. Ordinateur (150) configuré pour le développement d'une application logicielle activée par capteurs, l'ordinateur (150) comprenant :
- un dispositif de stockage (152) agencé pour stocker au moins un composant de système de capteur (50) fonctionnel pour contenir une collection associée de composants de source de données (30), de composants de série de données (32), de composants de commande (56) et de composants de champ de données (42), dans lequel les composants de source de données (30) sont fonctionnels pour obtenir des données de capteurs à partir d'un ou plusieurs capteurs (28, 164), les composants de série de données (32) sont fonctionnels pour collecter les données de capteur à partir des composants de source de données (30), les composants de commande (56) sont fonctionnels pour envelopper une API WINDOWS spécifiée par l'utilisateur ou une fonction DLL non gérée, de telle sorte que la fonction spécifiée par l'utilisateur fonctionne comme un composant de source de données (30), et les composants de champ de données (42) sont fonctionnels pour commander la collecte des données de capteur par les composants de série de données (32) ; et
- une interface utilisateur (166) agencée pour instancier la collection associée de composants de source de données (30), de composants de série de données (32), de composants de commande (56) et de composants de champ de données (42) en réponse aux entrées de l'utilisateur ;
dans lequel l'interface utilisateur (166) est agencée pour ajouter un ou plusieurs des composants de série de données (32) au composant de système de capteur (50) en réponse aux entrées de l'utilisateur et lier chacun des composants de série de données ajoutés (32) à au moins un des composants de source de données (30) dans le composant de système de capteur (50),
dans lequel chacun des composants de série de données ajoutées (32) collecte les données de capteur à partir de son composant de source de données lié (30) en générant un tableau de séries de données (40) dans le dispositif de stockage (152) et en remplissant automatiquement des lignes dans le tableau de séries de données (40) avec des données de capteur à partir du composant de source de données lié (30) ; et
dans lequel l'interface utilisateur (166) est agencée pour ajouter un ou plusieurs des composants de champ de données (42) au composant de système de capteur (50) en réponse aux entrées de l'utilisateur, chaque composant de champ de données ajouté (42) étant lié à au moins un des composants de série de données (32) dans le composant de système de capteur (50) et commandant la collecte des données de capteur à partir de son composant de série de données lié (32) en établissant une correspondance entre des sous-données dans les données de capteur et une colonne particulière du tableau de séries de données (40) en fonction d'une ou plusieurs propriétés identifiées par l'utilisateur.
